# EUROPÄISCHE PATENTSCHRIFT

(11) **EP 0 948 828 B1**
(45) Veröffentlichungstag und Bekanntmachung des Hinweises auf die Patenterteilung: **06.06.2001**
(21) Anmeldenummer: 97932640.2
(22) Anmeldetag: 25.07.1997
(51) Int. Cl.: H01M 10/42, H01M 6/50, H02J 7/10, H02J 9/06

(54) **VERFAHREN UND SCHALTUNGSANORDNUNG ZUM DEPASSIVIEREN EINER BATTERIE**
METHOD AND CIRCUIT FOR DEPASSIVATION OF A BATTERY
PROCEDE ET CIRCUIT DE DEPASSIVATION D'UNE PILE

(30) Priorität: 19.08.1996 AT 148596
(43) Veröffentlichungstag der Anmeldung: 13.10.1999
(73) Patentinhaber: Siemens Aktiengesellschaft Österreich, 1210 Wien (AT)
(72) Erfinder: LIEGL, Günther, A-1130 Wien (AT)
(74) Vertreter: Matschnig, Franz, Dipl.-Ing.
(86) Internationale Anmeldenummer: AT9700175
(87) Internationale Veröffentlichungsnummer: WO9808265

(56) Entgegenhaltungen:
- EP-A- 0 616 410
- GB-A- 2 292 249
- GB-A- 2 305 557
- US-A- 3 617 851
- US-A- 4 829 225
- US-A- 4 839 248
- US-A- 5 307 000
- PATENT ABSTRACTS OF JAPAN vol. 009, no. 004 (E-288), 10 January 1985 & JP 59 154768 A (NIHON DENCHI KK), 3 September 1984,
- PATENT ABSTRACTS OF JAPAN vol. 096, no. 011, 29 November 1996 & JP 08 185215 A (NISSAN MOTOR CO LTD), 16 July 1996,

## Beschreibung

Die Erfindung bezieht sich auf ein Verfahren zum Depassivieren einer Batterie, insbesondere einer Lithium Back-up-Batterie, bei welchem der Batterie durch periodisches Zuschalten einer Hilfslast ein impulsförmiger Depassivierungsstrom entnommen wird. Weiters bezieht sich die Erfindung auch auf eine Schaltungsanordnung zum Depassivieren einer Batterie, insbesondere einer Lithium Back-up-Batterie, mit zumindest einem, von einem Taktgeber gesteuerten Schalter, der zwischen die Batterie und eine Last geschaltet ist.

Back-up-Batterien werden in der Elektronik verwendet, um bei einer Unterbrechung der Spannungsversorgung, z.B. durch Netzausfall, den elektronischen Verbraucher, z.B. einen Speicher, über eine genügende Zeit hinweg mit Strom zu versorgen. Derartige Batterien mit einer Kapazität z.B. in der Größenordnung von 1Ah bei einer Spannung von typisch 3,6 V sollen ihre Funktion über Jahre hindurch beibehalten. Ein Problem liegt allerdings darin, daß Lithiumbatterien bei Lagerung eine Passivierungsschicht aufbauen, welche bewirkt, daß die Klemmenspannung der Batterie bei Belastung absinkt und ihren Nominalwert erst erreicht, bis die Depassivierungsschicht abgebaut ist, was einige Minuten dauern kann. Bei Verwendung als Back-up-Batterie kann es dadurch zu einem Datenverlust in dem zu versorgenden Speicher kommen.

Nach dem Stand der Technik versucht man dieser Passivierung dadurch entgegenzuwirken, daß man die Batterie entweder mit einem konstanten Dauer-Depassivierungsstrom oder periodisch, mit einem pulsförmigen Depassivierungsstrom belastet. Diese Verfahren arbeiten allerdings nur bei Nominalbedingungen, d.h. bei im wesentlichen neuer Batterie und üblicher Umgebungstemperatur mit vertretbaren Depassivierungsströmen. Wenn man auch eine weitgehend erschöpfte Batterie und die maximal mögliche Umgebungstemperatur berücksichtigt, führt dies zu sehr hohen Entladeströmen und damit zu einer sehr raschen Verringerung der Restkapazität der Batterie alleine durch den Depassivierungsvorgang.

Beispielsweise beschreibt die WO 89/06868 A1 ein Entpassivierungsverfahren für die Lithiumbatterie eines ausschließlich batteriebetriebenen Gerätes, nämlich einer automatischen Pipette mit einem Mikroprozessor und einem Schrittmotor. Beim Einschalten des Gerätes wird eine Depassivierungsroutine in Gang gesetzt, bei welcher der Verbraucher periodisch je 20 ms, mit Pausen von 4 ms an die Batterie gelegt wird, bis die Batteriespannung oberhalb eines Referenzwertes liegt. Andererseits wird diese Routine auch abgebrochen, falls nach einer bestimmten Zeit, hier 20 s, die Sollspannung der Batterie nicht erreicht wird.

Das bekannte Verfahren ist auf eine Lithiumbatterie ausgelegt, die für den normalen Betrieb des Gerätes herangezogen ist und nicht als Back-Up-Batterie dient. Daher erfolgt das Entpassivieren mit jedem Einschalten des Gerätes, und es ist ein hoher Entpassivierungsstrom - dem Strombedarf des Gerätes entsprechend - vorgesehen. Auf eine Back-Up-Batterie läßt sich dieses bekannte Verfahren nicht anwenden, da bei dieser ein im Prinzip ständig entpassivierter Zustand vorausgesetzt wird. Entpassivierungszeiten in der Dauer von bis zu 20 Sekunden, wie in dem Dokument WO 89/06868 Al beschrieben, würden zu einem Datenverlust in von der Back-Up-Batterie versorgten Speichern führen.

Eine Aufgabe der Erfindung liegt darin, ausgehend von einer periodischen Depassivierung den Entladungszustand der Batterie und den Einfluß der Umgebungstemperatur zu berücksichtigen, um eine unnötige Belastung der Batterie durch den Depassivierungsstrom zu vermeiden.

Die gestellte Aufgabe wird, ausgehend von dem eingangs genannten Verfahren, dadurch gelöst, daß bei jedem periodischen Anschalten der Hilfslast an die Batterie die Batteriespannung mit einem Referenzwert verglichen wird, wobei
a) falls die Batteriespannung oberhalb des Referenzwertes liegt, die Hilfslast nach einer ersten kurzen Zeitspanne abgeschaltet wird, oder
b) falls die Batteriespannung unterhalb des Referenzwertes liegt, die Hilfslast während eines Zeitraums innerhalb einer zweiten, längeren Zeitspanne an die Batterie geschaltet bleibt.

Zur Lösung der Aufgabe dient auch eine Schaltungsanordnung der oben genannten Art, bei welcher erfindungsgemäß die Hilfslast über eine Schalteranordnung an der Batterie liegt, ein Komparator zum Vergleich der Batteriespannung mit einer Referenzspannung vorgesehen ist, und die Schalteranordnung von Taktgeber und Komparator so steuerbar ist, daß die Schalteranordnung während einer ersten, kurzen Zeitspanne geschlossen und während einer zweiten, längeren Zeitspanne dann geschlossen ist, wenn die Batteriespannung unterhalb der Referenzspannung liegt.

Weitere vorteilhafte Ausführungsformen sind in den abhängigen Unteransprüchen zu den Ansprüchen 1 und 9 gekennzeichnet.

Die Erfindung samt weiterer Vorteile ist im folgenden anhand beispielsweiser Ausführungsformen näher erläutert, die in der Zeichnung veranschaulicht sind. In dieser zeigen vereinfacht Fig. 1 eine erste Schaltungsanordnung nach der Erfindung, Fig. 2 eine zweite Schaltungsanordnung nach der Erfindung, Fig. 3 eine dritte Schaltungsanordnung nach der Erfindung und Fig. 4 den Verlauf der beiden durch den Taktgeber vorgegebenen Zeitspannen.

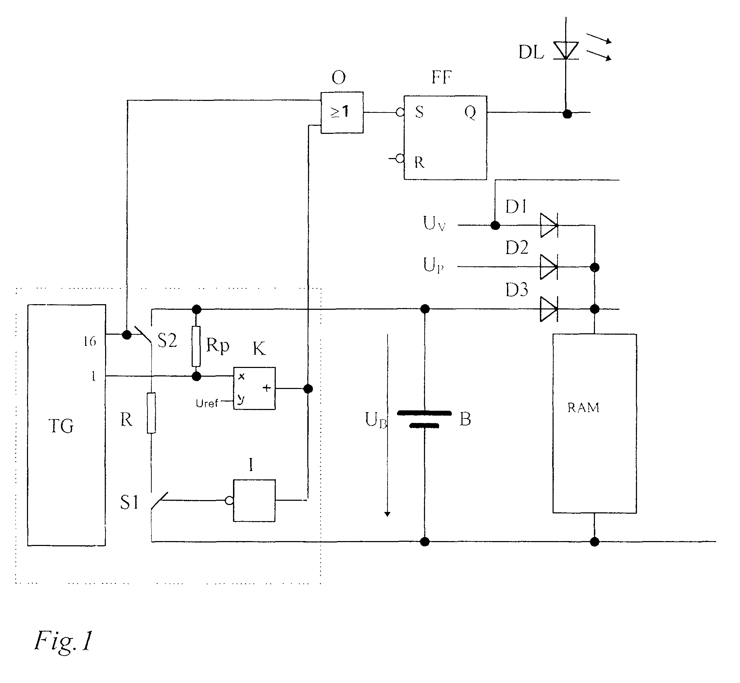

Gemäß Fig. 1 wird in einem elektronischen Gerät ein Verbraucher, hier ein Speicher RAM von einer Versorgungsspannung Uᵥ über eine Diode D1 versorgt. Um diese Versorgung auch bei Unterspannung der Versorgungsspannung oder deren Zusammenbruch, beispielsweise bei Netzausfall, zu gewährleisten, ist eine Back-up-Batterie B vorgesehen, die über eine Diode D3 den Verbraucher RAM versorgen kann, falls die Versorgungsspannung U_{V} zu gering wird. Die Versorgungsspannung U_{V} beträgt beispielsweise 5 V, wogegen die Nominalspannung der Back-up-Batterie B 3,6 V beträgt. Falls die Versorgungsspannung U_{V} somit unter 3,6 V absinkt, übernimmt die Batterie B die Versorgung des Verbrauchers RAM. Bei manchen Anwendungen kann noch eine hier nicht gezeigte weitere Pufferbatterie vorgesehen sein, deren Pufferspannung Uₚ über eine Diode D2 dem Verbraucher RAM zugeführt wird. Bei typischen Anwendungsfällen besitzt die Lithiumbatterie B eine Kapazität von 1,2 Ah.

Weitere vorteilhafte Ausführungsformen sind in den abhängigen Unteransprüchen zu den Ansprüchen 1 und 9 gekennzeichnet.

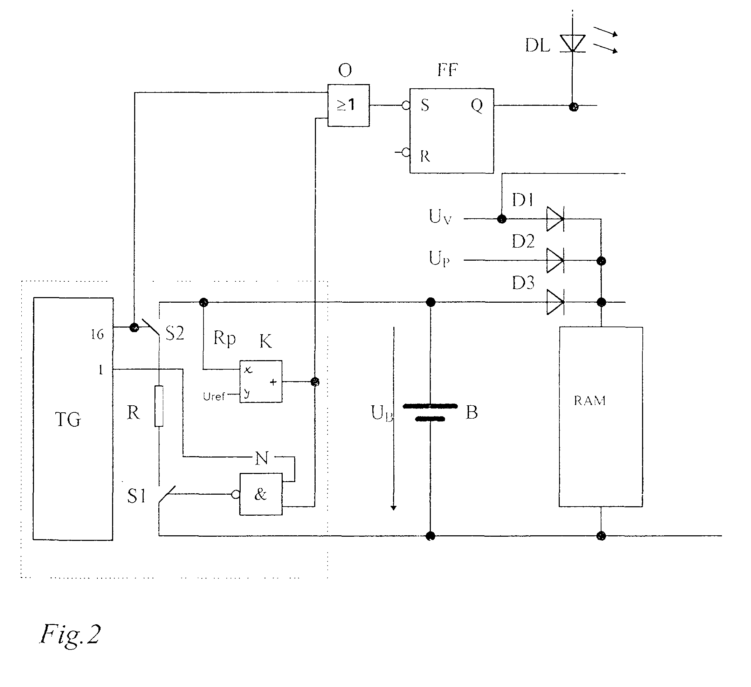

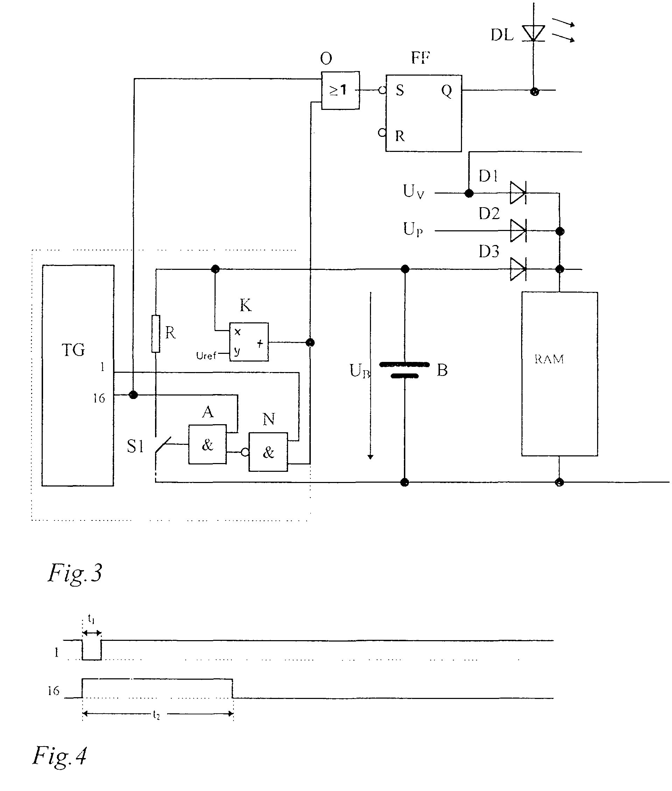

Die Erfindung samt weiterer Vorteile ist im folgenden anhand beispielsweiser Ausführungsformen näher erläutert, die in der Zeichnung veranschaulicht sind. In dieser zeigen vereinfacht Fig. 1 eine erste Schaltungsanordnung nach der Erfindung, Fig. 2 eine zweite Schaltungsanordnung nach der Erfindung, Fig. 3 eine dritte Schaltungsanordnung nach der Erfindung und Fig. 4 den Verlauf der beiden durch den Taktgeber vorgegebenen Zeitspannen.

Gemäß Fig. 1 wird in einem elektronischen Gerät ein Verbraucher, hier ein Speicher RAM von einer Versorgungsspannung U_{V} über eine Diode D1 versorgt. Um diese Versorgung auch bei Unterspannung der Versorgungsspannung oder deren Zusammenbruch, beispielsweise bei Netzausfall, zu gewährleisten, ist eine Back-up-Batterie B vorgesehen, die über eine Diode D3 den Verbraucher RAM versorgen kann, falls die Versorgungsspannung U_{V} zu gering wird. Die Versorgungsspannung U_{V} beträgt beispielsweise 5 V, wogegen die Nominalspannung der Back-up-Batterie B 3,6 V beträgt. Falls die Versorgungsspannung U_{V} somit unter 3,6 V absinkt, übernimmt die Batterie B die Versorgung des Verbrauchers RAM. Bei manchen Anwendungen kann noch eine hier nicht gezeigte weitere Pufferbatterie vorgesehen sein, deren Pufferspannung U_{P} über eine Diode D2 dem Verbraucher RAM zugeführt wird. Bei typischen Anwendungsfällen besitzt die Lithiumbatterie B eine Kapazität von 1,2 Ah.

Um die weiter oben erwähnte und erforderliche Depassivierung der Back-up-Batterie B zu gewährleisten, ist erfindungsgemäß ein Taktgenerator TG vorgesehen, der zwei Ausgänge "1" und "16" aufweist, an welchen periodisch die in Fig. 3 dargestellten Impulse auftreten. Beide Impulse beginnen gleichzeitig, doch dauert der zweite Impuls beispielsweise sechzehn Mal länger als der erste Impuls. Demgemäß werden im folgenden die Impulse auch mit "kurzer" und "längerer" Impuls bezeichnet. Bei typischen Anwendungen beträgt die Dauer des kurzen Impulses beispielsweise 100 ms, wogegen dann die Dauer des langen Impulses 1,6 s beträgt. Diese Impulse können z.B. mit einer Periode von 400 s auftreten. In der Praxis hat sich eine Zeitspanne t1 für den kurzen Impuls zwischen 20 und 200 ms bewährt, wogegen die Zeitspanne t2 für den längeren Impuls zwischen 300 und 3000 ms betragen kann. Das Verhältnis von längerer zu kürzerer Zeitspanne liegt zweckmäßigerweise zwischen 5 und 30.

Um die Back-up-Batterie B periodisch an einen Vorlastwiederstand R, der bei einem Ausführungsbeispiel z.B. in der Größenordnung von 500 Ohm liegen kann, legen zu können, sind zwei gesteuerte Schalter S1 und S2 vorgesehen. Diese Schalter sind in der Praxis als elektronische Schaltelemente, z.B. Transistoren od. dgl. ausgeführt, und sie haben den Zweck, erfindungsgemäß die Batterie B periodisch mit der Vorlast R zu verbinden. Bei diesem Belastungszustand soll sodann die Batteriespannung U_{B} mit einer Referenzspannung U_{ref} verglichen werden, und aus diesem Vergleich wird eine Entscheidung dahingehend abgeleitet, ob es erforderlich ist, die Batterie B längere Zeit, nämlich über eine Dauer t2 bzw. periodisch mehrmals über eine Dauer t2 an die Last R zu legen. Falls die Batteriespannung U_{B} oberhalb der Referenzspannung U_{ref} liegt, ist eine Belastung durch die Last R über die längere Zeitdauer t2 bzw. periodisch über mehrere Zeitdauern t2 nicht erforderlich, und die Batterie B soll dann nur periodisch während der kurzen Zeitdauer t1 an die Last gelegt werden, wodurch sich im Mittel eine praktisch vernachlässigbare Belastung der Batterie ergibt.

Um dieses erfindungsgemäße Depassivierungsverfahren durchzuführen sind verschiedene Möglichkeiten denkbar, von welchen eine Realisierung von Fig. 1 dargestellt ist. Demnach wird der zweite Schalter S2 unmittelbar von den längeren Impulsen der Dauer t2 gesteuert, d.h. unter Berücksichtigung der Darstellung nach Fig. 3 währen der Dauer des längeren Impulses geschlossen. Der kürzere Impuls "1" liegt an einem Eingang x eines Komparators K, an dessen anderem Eingang y die erwähnte Referenzspannung U_{ref} liegt. Der Eingang x des Komparators K ist überdies über einen verhältnismäßig hochohmigen Widerstand R_{P} mit der Back-up-Batterie B, hier mit ihrem positiven Pol verbunden. Der Ausgang des Komparators K wirkt über einen Inverter I auf den ersten Schalter S1.

Die Funktion der Schaltung ist nun die folgende:
Periodisch, zu einem gegebenen Zeitpunkt beginnend, tritt sowohl der kürzere Impuls "1" mit der Zeitdauer t1 auf, wobei bei dieser Schaltungsvariante ein negativer Impuls verwendet wird. Gleichzeitig setzt der zweite, längere Impuls "16" mit der Zeitdauer t2 ein. Wegen der Hochohmigkeit des Widerstandes R_{P} hat dies auf jeden Fall zur Folge, daß beide Schalter S1 und S2 geschlossen werden, sodaß die Back-up-Batterie B nun an dem Lastwiderstand R liegt. Nach Ende der Zeitdauer t1 liegt an dem Eingang x des Komparators K über den Widerstand R_{P} die augenblickliche Batteriespannung U_{B}, die nun mit der Referenzspannung U_{ref} verglichen wird. Falls die Batteriespannung U_{B} größer als die Referenzspannung U_{ref} ist, wird der Schalter S1 geöffnet, sodaß der Batterie B trotz geschlossenem Schalter S2 kein Depassivierungsstrom entnommen werden kann. Es versteht sich, daß bei entsprechend passivierter Batterie ein Anschalten des Vorlastwiderstandes R an die Batterie B ohne weiteres mehrere Male hintereinander über die längere Zeitdauer t2 erforderlich sein kann, bis eine entsprechend hohe, nämlich oberhalb der Referenzspannung U_{ref} liegende Batteriespannung U_{B} erreicht ist.

Die Schaltung nach Fig. 2 gleicht im wesentlichen der oben beschriebenen Schaltung, doch ermöglicht sie einerseits die Überprüfung der Batteriespannung während des gesamten, längeren Impulses mit der Dauer t2 und sieht überdies eine Anzeige einer Unterspannung der Pufferbatterie B vor. Die Verknüpfung des kürzeren Impulses "1" mit dem Ergebnis der Batterie-Überprüfung erfolgt hier nach dem Ausgang des Komparators K vorliegendenfalls in einem NAND-Glied N, wobei die Eingänge des NAND-Gliedes N einerseits mit dem Ausgang "1" des Taktgebers TG und andererseits mit dem Ausgang "+" des Komparators K verbunden sind, wogegen der Ausgang des NAND-Gliedes auf den gesteuerten Schalter S1, d.h. auf dessen Steuereingang wirkt. Bei dieser Schaltungsvariante ist der Eingang x des Komparators K unmittelbar mit dem positiven Pol der Batterie B verbunden, d.h. der Widerstand R_{P} nach Fig. 1 ist nicht erforderlich. Die Funktion der Schaltung ist, von dieser nachträglichen Verknüpfung abgesehen, die gleiche wie jene nach Fig. 1. Zusätzlich kann hier eine Batterie unter Spannung, die während der Überprüfung über den Zeitraum t2 auftritt, angezeigt werden. Zu diesem Zweck sind der Ausgang "16" des Taktgebers TG, an dem der längere Impuls mit der Zeitdauer t2 auftritt, sowie der Ausgang des Komparators K mit den Eingängen eines Oder-Gliedes O verbunden, dessen Ausgang dem Set-Eingang S eines Flip-Flop FF zugeführt ist. Der Ausgang des Flip-Flop steuert beispielsweise eine Leuchtdiode DL, wobei die Anzeige an dem Reset-Eingang R des Flip-Flop FF rückgesetzt werden kann.

Die in Fig. 3 dargestellte Schaltung entspricht im wesentlichen jener nach Fig. 2, doch entfällt hier der Schalter S2 und es wird ein zusätzliches UND-Glied A verwendet, wobei auch hier die Spannungsüberprüfung während des gesamten längeren Impulses t2 erfolgt.

Der Ausgang "16" des Taktgebers TG liegt an einem Eingang eines UND-Gliedes A, welcher den Schalter S1 ansteuert. An dem zweiten Eingang des UND-Gliedes A liegt der Ausgang des NAND-Gliedes N.

Somit schließt der Schalter S1, falls sowohl der längere als auch der kürzere Impuls auftreten, d.h. falls hier der Ausgang "16" HIGH und der Ausgang "1" LOW ist. Außerdem schließt der Schalter S1 bzw, bleibt geschlossen, falls während des längeren Impulses die Batteriespannung U_{B} kleiner als die Referenzspannung U_{Ref} ist, d.h. falls der Ausgang "16" des Taktgebers TG HIGH ist und der Ausgang des Komparators K LOW.

Es versteht sich, daß im Rahmen der durch die Ansprüche festgelegten Erfindung auch andere Schaltungsanordnungen zur Realisierung der Erfindung möglich sind, wobei der Fachmann von dem erfindungsgemäß angegebenen Verfahren ausgehen kann.

## Patentansprüche

1. Verfahren zum Entpassivieren einer Lithiumbatterie (B), insbesondere einer Back-Up-Batterie, bei welchem der Batterie ein impulsförmiger Entpassivierungsstrom entnommen und hierbei die Batteriespannung mit einem Referenzwert verglichen wird, wobei der Entpassivierungsvorgang unterbrochen wird, falls die Batteriespannung (U_{B}) oberhalb der Referenzspannung (U_{Ref}) liegt,
**dadurch gekennzeichnet, daß**
periodisch eine Hilfslast (R) an die Batterie (B) angeschaltet wird, wobei
a) falls die Batteriespannung (U_{B}) oberhalb des Referenzwertes (U_{Ref}) liegt, die Hilfslast nach einer ersten, kurzen Zeitspanne (t1) abgeschaltet wird, oder
b) falls die Batteriespannung unterhalb des Referenzwertes liegt, die Hilfslast während eines Zeitraums innerhalb einer zweiten, längeren Zeitspanne (t2) an die Batterie geschaltet bleibt.

2. Verfahren nach Anspruch 1, **dadurch gekennzeichnet, daß** der Vergleich der Batteriespannung (U_{B}) mit dem Referenzwert (U_{Ref}) innerhalb der zweiten, längeren Zeitspanne (t2) erfolgt.

3. Verfahren nach Anspruch 1 oder 2, **dadurch gekennzeichnet, daß** mit dem Vergleich der Batteriespannung (U_{B}) mit dem Referenzwert (U_{Ref}) bereits innerhalb der ersten kurzen Zeitspanne (t1) begonnen wird.

4. Verfahren nach Anspruch 2, **dadurch gekennzeichnet, daß** die Hilfslast (R) noch während der zweiten, längeren Zeitspanne (t2) abgeschaltet ist.

5. Verfahren nach einem der Ansprüche 1 bis 4, **dadurch gekennzeichnet, daß** die Hilfslast mit einer Periode von 100 bis 5000 s angeschaltet wird.

6. Verfahren nach einem der Ansprüche 1 bis 5, **dadurch gekennzeichnet, daß** die kurze Zeitspanne (t1) zwischen 20 und 200 ms beträgt.

7. Verfahren nach einem der Ansprüche 1 bis 6, **dadurch gekennzeichnet, daß** die längere Zeitspanne (t2) zwischen 300 und 3000 ms beträgt.

8. Verfahren nach einem der Ansprüche 1 bis 7, **dadurch gekennzeichnet, daß** das Verhältnis von längerer (t2) zu kürzerer (t1) Zeitspanne zwischen 5 und 30 liegt.

9. Schaltungsanordnung zum Depassivieren einer Lithiumbatterie (B), insbesondere einer Back-Up-Batterie, mit einer von einem Taktgeber (TS) gesteuerten Schalteranordnung (S1, S2), die zwischen die Batterie und eine Last (R) geschaltet ist, und mit einem Komparator (K) zum Vergleich der Batteriespannung (U_{B}) mit einer Referenzspannung (U_{Ref}),
**dadurch gekennzeichnet, daß**
die Schalteranordnung (S1; S1, S2) von Taktgeber (TG) und Komparator (K) so steuerbar ist, daß die Schalteranordnung während einer ersten, kurzen Zeitspanne (t1) geschlossen und während einer zweiten, längeren Zeitspanne (t2) dann geschlossen ist, wenn die Batteriespannung (U_{B}) unterhalb der Referenzspannung (U_{Ref}) liegt.

10. Schaltungsanordnung nach Anspruch 9, **dadurch gekennzeichnet, daß** eine Hilfslast (R) über zwei in Serie geschaltete, gesteuerte Schalter (S1, S2) an der Batterie (B) liegt, wobei einer der beiden Schalter (S1) über den Taktgeber (TG) periodisch über die erste kurze Zeitspanne (t1) und der andere der beiden Schalter (S2) periodisch über die zweite, längere Zeitspanne (t2) ansteuerbar ist, und der Ausgang des Komparators (K) zur zusätzlichen Ansteuerung eines der beiden Schalter (S1) so herangezogen ist, daß dieser Schalter öffnet, falls die Batteriespannung (U_{B}) die Referenzspannung (U_{Ref}) übersteigt.

11. Schaltungsanordnung nach Anspruch 9 oder 10, **dadurch gekennzeichnet, daß** der Taktgeber (TG) zur periodischen Abgabe eines ersten kürzeren und eines mit diesem gleichzeitig beginnenden zweiten, längeren Impulses eingerichtet ist.

12. Schaltungsanordnung nach Anspruch 10 oder 11, **dadurch gekennzeichnet, daß** der eine der Impulse einem der Schalter (S2) zu dessen Steuerung unmittelbar und der andere der Impulse dem anderen Schalter (S1) nach logischer Verknüpfung mit einem der Eingänge oder dem Ausgang des Komparators (K) zugeführt ist.

13. Schaltungsanordnung nach Anspruch 12, **dadurch gekennzeichnet, daß** der eine der Impulse jenem Komparatoreingang (x) zugeführt ist, dem auch die Batteriespannung (U_{B}) zugeführt ist, wobei des Komparatorausgangssignal unmittelbar oder über einen Inverter (I) einem der Schalter (S1) zu dessen Steuerung zugeführt ist.

14. Schaltungsanordnung nach Anspruch 12, **dadurch gekennzeichnet, daß** das Ausgangssignal des Komparators (K) und einer der Impulse den Eingängen eines UND bzw. NAND-Gliedes (N) zugeführt sind, dessen Ausgang zur Steuerung einer der beiden Schalter (S1) herangezogen ist.

15. Schaltungsanordnung nach Anspruch 9, **dadurch gekennzeichnet, daß** die Schalteranordnung aus einem von dem Ausgang eines UND-Gliedes (A) angesteuerten Schalter (S1) besteht, wobei einem Eingang dieses UND-Gliedes der längere Impuls (t2) des Taktgebers (TG) zugeführt ist, der andere Eingang des UND-Gliedes mit dem Ausgang eines NAND-Gliedes (N) verbunden ist und einem Eingang des NAND-Gliedes der kürzere Impuls (t1) des Taktgebers zugeführt ist und der andere Eingang des NAND-Gliedes mit dem Ausgang des Komparators (K) verbunden ist.

## Claims

1. Process for depassivating a lithium battery (B), in particular a back-up battery, wherein a pulsed depassivation current is drawn from the battery and the battery voltage is thereby compared with a reference value, wherein the depassivating process is interrupted if the battery voltage (U_{B}) is above the reference voltage (U_{Ref}),
characterised in that
periodically an auxiliary load (R) is connected to the battery (B), wherein
a) if the battery voltage (U_{B}) is above the reference value (U_{Ref}), the auxiliary load is switched off after a first, short time span (t1), or
b) if the battery voltage is below the reference value, the auxiliary load remains connected to the battery during a period within a second, longer time span (t2).

2. Process according to claim 1, characterised in that the comparison of the battery voltage (U_{B}) with the reference value (U_{Ref}) takes place within the second, longer time span (t2).

3. Process according to claim 1 or 2, characterised in that the comparison of the battery voltage (U_{B}) with the reference value (U_{Ref}) commences within the first, short time span (t1).

4. Process according to claim 2, characterised in that the auxiliary load (R) is still switched off during the second, longer time span (t2).

5. Process according to one of claims 1 to 4, characterised in that the auxiliary load is connected for a period of 100 to 5000 s.

6. Process according to one of claims 1 to 5, characterised in that the short time span (tl) amounts to between 20 and 200 ms.

7. Process according to one of claims 1 to 6, characterised in that the longer time span (t2) amounts to between 300 and 3000 ms.

8. Process according to one of claims 1 to 7, characterised in that the ratio of longer (t2) to shorter (t1) time span is between 5 and 30.

9. Circuit arrangement for depassivating a lithium battery (B), in particular a back-up battery, with a switch arrangement (S1, S2) controlled by a clock generator (TS), which switch arrangement is connected between the battery and a load (R), and with a comparator (K) for comparison of the battery voltage (U_{B}) with a reference voltage (U_{Ref}),
characterised in that
the switch arrangement (S1; S1, S2) of the clock generator (TG) and comparator (K) can be controlled in such a way that the switch arrangement is closed during a first, short time span (t1) and is then closed during a second, longer time span (t2) if the battery voltage (U_{B}) is below the reference voltage (U_{Ref}).

10. Circuit arrangement according to claim 9, characterised in that an auxiliary load (R) is connected to the battery (B) by two series-connected, controlled switches (S1, S2), wherein one of the two switches (S1) can be controlled by the clock generator (TG) periodically over the first, short time span (t1) and the other of the two switches (S2) can be controlled periodically over the second, longer time span (t2), and the output of the comparator (K) is used for additional control of one of the two switches (S1) in such a way that this switch opens if the battery voltage (U_{B}) exceeds the reference voltage (U_{Ref}).

11. Circuit arrangement according to claim 9 or 10, characterised in that the clock generator (TG) is arranged for periodic discharge of a first, shorter pulse and of a second, longer pulse beginning at the same time as this first pulse.

12. Circuit arrangement according to claim 10 or 11, characterised in that one of the pulses is supplied directly to one of the switches (S2) in order to control it and the other of the pulses is supplied to the other switch (S1) after logic coupling to one of the inputs or to the output of the comparator (K).

13. Circuit arrangement according to claim 12, characterised in that one of the pulses is supplied to the comparator input (x) to which the battery voltage (U_{B}) is also supplied, wherein the comparator output signal is supplied directly or via an inverter (I) to one of the switches (S1) in order to control it.

14. Circuit arrangement according to claim 12, characterised in that the output signal of the comparator (K) and one of the pulses are supplied to the inputs of an AND or NAND member (N), of which the output is used to control one of the two switches (S1).

15. Circuit arrangement according to claim 9, characterised in that the switch arrangement consists of a switch (S1) controlled by the output of an AND member (A), wherein the longer pulse (t2) of the clock generator (TG) is supplied to an input of this AND member, the other input of the AND member is connected to the output of a NAND member (N) and the shorter pulse (t1) of the clock generator is supplied to an input of the NAND member, and the other input of the NAND member is connected to the output of the comparator (K).

## Revendications

1. Procédé de dépolarisation d'une batterie au lithium (B), notamment d'une batterie back-up, selon lequel un courant de dépolarisation sous forme. d'impulsions est prélevé de la batterie et la tension de la batterie est en l'occurrence comparée à une valeur de référence, le processus de dépolarisation étant interrompu au cas où la tension de batterie (U_{B}) est supérieure à la tension de référence (U_{Ref}),
caractérisé en ce que
une charge auxiliaire (R) est connectée périodiquement à la batterie (B), étant précisé que
a) au cas où la tension de la batterie (U_{B}) est supérieure à la valeur de référence (U_{Ref}), la charge auxiliaire est déconnectée après un premier bref intervalle de temps (t1), ou
b) au cas où la tension de la batterie est inférieure à la valeur de référence, la charge auxiliaire reste connectée à la batterie pendant un laps de temps d'un deuxième intervalle de temps (t2) plus long.

2. Procédé selon la revendication 1, caractérisé en ce que la comparaison entre la tension de batterie (U_{B}) et la valeur de référence (U_{Ref}) est effectuée à l'intérieur du deuxième intervalle de temps (t2) plus long.

3. Procédé selon la revendication 1 ou 2, caractérisé en ce que la comparaison entre la tension de batterie (U_{B}) et la valeur de référence (U_{Ref}) commence déjà à l'intérieur du premier bref intervalle de temps (t1).

4. Procédé sélon la revendication 2, caractérisé en ce que la charge auxiliaire (R) est encore déconnectée pendant le deuxième intervalle de temps (t2) plus long.

5. Procédé selon l'une quelconque des revendications 1 à 4, caractérisé en ce que la charge auxiliaire est connectée durant une période de 100 à 5 000 s.

6. Procédé selon l'une quelconque des: revendications 1 à 5, caractérisé en ce que le bref intervalle de temps (t1) est compris entre 20 et 200 ms.

7. Procédé selon l'une quelconque des revendications 1 à 6, caractérisé en ce que l'intervalle de temps (t2) plus long est compris entre 300 et 3 000 ms.

8. Procédé selon l'une quelconque des revendications 1 à 7, caractérisé en ce que le rapport entre l'intervalle de temps (t2) plus long et l'intervalle de temps (t1) plus court se situe entre 5 et 30.

9. Montage destiné à la dépolarisation d'une batterie au lithium (B), notamment d'une batterie back-up, comportant un montage (S1, S2) commandé par un générateur d'impulsions (TS), qui est branché entre la batterie et une charge (R), et un comparateur (K) destiné à la comparaison de la tension de batterie (U_{B}) avec une tension de référence (U_{Ref})
caractérisé en ce que
le montage (S1 ; S1, S2) constitué du générateur d'impulsions (TG) et du comparateur (K) peut être commandé de telle sorte que le montage soit fermé pendant un premier bref intervalle de temps (t1), et qu'il soit fermé pendant un deuxième intervalle de temps (t2) plus long lorsque la tension de batterie (U_{B}) est inférieure à la tension de référence (U_{Ref}).

10. Montage selon la revendication 9, caractérisé en ce qu'une charge auxiliaire (R) est connectée à la batterie (B) par l'intermédiaire de deux commutateurs (S1, S2) commandés couplés en série, l'un des deux commutateurs (S1) pouvant être commandé périodiquement par l'intermédiaire du générateur d'impulsions (TG) pendant le premier bref intervalle de temps (t1), et l'autre des deux commutateurs (S2) pouvant être commandé périodiquement pendant le deuxième intervalle de temps (t2) plus long, et la sortie du comparateur (K) étant utilisée pour la commande supplémentaire de l'un des deux commutateurs (S1) de telle sorte que ce commutateur s'ouvre au cas où la tension de batterie (U_{B}) dépasse la tension de référence (U_{Ref}).

11. Montage selon la revendication 9 ou 10, caractérisé en ce que le générateur d'impulsions (TG) est agencé pour délivrer périodiquement une première impulsion plus courte, et une deuxième impulsion plus longue commençant simultanément avec la première.

12. Montage selon la revendication 10 ou 11, caractérisé en ce que l'une des impulsions est transmise directement à l'un des commutateurs (S2) pour la commande de ce dernier, et en ce que l'autre des impulsions est transmise à l'autre commutateur (S1) après un enchaînement logique avec l'une des entrées ou la sortie du comparateur (K).

13. Montage selon la revendication 12, caractérisé en ce que l'une des impulsions est transmise à l'entrée (x) du comparateur à laquelle est également transmise la tension de batterie (U_{B}), le signal de sortie du comparateur étant transmis directement, ou par l'intermédiaire d'un inverseur (I), à l'un des commutateurs (S1) pour la commande de celui-ci.

14. Montage selon la revendication 12, caractérisé en ce que le signal de sortie du comparateur (K) et l'une des impulsions sont transmis aux entrées ET ou NAND d'un élément (N), dont la sortie est utilisée pour la commande de l'un des deux commutateurs (S1).

15. Montage selon la revendication 9, caractérisé en ce que le montage est constitué d'un commutateur (S1) commandé par la sortie d'un élément ET (A), l'impulsion plus longue (t2) du générateur d'impulsions (TG) étant transmise à une entrée de cet élément ET, l'autre entrée de l'élément ET étant reliée à la sortie d'un élément NAND (N), et en ce que l'impulsion plus courte (t1) du générateur d'impulsions est transmise à une entrée de l'élément NAND, et l'autre entrée de l'élément NAND étant reliée à la sortie du comparateur (K).
